Europäisches Patentamt

European Patent Office

Office européen des brevets

(11) Publication number: **0 426 921 A2**

# EUROPEAN PATENT APPLICATION

(21) Application number: **89311926.3**

(22) Date of filing: **17.11.89**

(51) Int. Cl.5: **G06K 7/10**

(30) Priority: **11.10.89 US 419655**

(43) Date of publication of application:
**15.05.91 Bulletin 91/20**

(84) Designated Contracting States:
**DE FR GB IT**

(71) Applicant: **Bianco, James Salvatore**
**217 Brainard Road**
**Enfield, CT 06082(US)**

(72) Inventor: **Bianco, James Salvatore**
**217 Brainard Road**
**Enfield, CT 06082(US)**

(74) Representative: **Blatchford, William Michael et al**
**Withers & Rogers 4 Dyer's Buildings Holborn**
**London EC1N 2JT(GB)**

(54) **Bar code reading wand with retracting lens.**

(57) In a preferred embodiment, a bar code reading wand having a retracting lens. The lens is secured in a lens mount which is disposed for axial movement within the end portion of the wand. The lens mount is spring-biased to its normal position, with the end of the lens protruding from the end portion of the wand, which end portion is attached to the barrel of the wand. When the wand is dropped on its reading end or the lens otherwise sharply contacts a hard surface, the lens and lens mount are readily pushed into the tip holder on initial contact by compression of the spring and the relatively undamageable tip holder receives most of the force of the impact. If nevertheless damaged, the lens is easily replaced by removing the tip holder and replacing the damaged lens by removing it and inserting a new lens mounted lens. The retracting lens can be easily retrofit to existing bar code reader wands by replacing the end portions thereof with an end portion according to the present invention.

EP 0 426 921 A2

The present invention relates to a bar code reading wand.

Bar codes are found in a variety of applications as an information source, typically for digital processors. Such codes are used at point-of sale merchandising for pricing and inventory count, in controlled personnel access systems, in manufacturing for work-in-process and inventory control, and for subsequent article identification after manufacture, to name only a few applications. The bar codes themselves comprise a series of parallel lines, with each line typically in the range of 1/8" to 1' in length and 1 to 50 mils in thickness, and are usually printed with black ink on a white background. The lines may variously have unequal spacing and/or unequal thickness, with the variations in spacing and/or thickness by the information "stored" in the bar code. A bar code is "read" by serially illuminating the bars, with the bars absorbing the light and the background reflecting the light. The resulting pattern of reflection and nonreflection is sensed by a light detecting device which provides input to the digital processor.

In many applications, bar codes are read by means of a pen-like wand which is held by the user much like a pen and which has a lens at one end, which lens is drawn across, and usually in contact with, a bar code. The wand includes the light detecting device and electronic circuitry which is connected to data processing means.

A significant limitation of conventional bar code reading wands is that the lenses thereof are fixed to the end of the wand and, if the wand is dropped or the lens thereof sharply contacts a hard surface, either of which occurs relatively frequently, the lens may crack or break. The result is that either the wand or the lens must be replaced. In either case, the damage is expensive to correct.

In one recent development, there has been provided a bar code reading wand which, essentially, is enclosed in a separate tube. The wand is spring-loaded so that if the reading end thereof contacts a hard surface, the entire wand retracts within the tube. While such an arrangement is relatively satisfactory, it is complex and expensive. A further disadvantage of the device is that the retracting feature cannot be retrofit to other bar code reading wands.

Accordingly, it is a principal object of the present invention to provide a bar code reading wand in which the lens thereof is retractable so that contact of the lens with a hard surface causes the lens to retract within the body of the wand, thereby minimizing the possibility of the lens cracking or braking.

Another object of the invention is to-provide such a bar code reading wand in which the lens thereof may be easily and economically replaced.

An additional object of the invention is to provide a retracting lens for bar code reading wands that can be retrofit to existing wands.

Other objects of the present invention, as well as particular features and advantages thereof, will be elucidated in, or be apparent from, the following description and the accompanying drawing figure.

The present invention substantially overcomes the above limitations, among others, of prior known bar code reading wands by providing, in a preferred embodiment, a bar code reading wand having a retracting lens. The lens is secured in a lens mount which is disposed for axial movement within the end portion of the wand. The lens mount is spring-biased to its normal position, with the end of the lens protruding from the end portion of the wand, which end portion is attached to the barrel of the wand. When the wand is dropped on its reading end or the lens otherwise sharply contacts a hard surface, the lens and lens mount are readily pushed into the tip holder on initial contact by compression of the spring and the relatively undamageable tip holder receives most of the force of the impact. If nevertheless damaged, the lens is easily replaced by removing the tip holder and replacing the damaged lens by removing it and inserting a new lens mounted lens. The retracting lens can be easily retrofit to existing bar code reader wands by replacing the end portions thereof with an end portion according to the present invention.

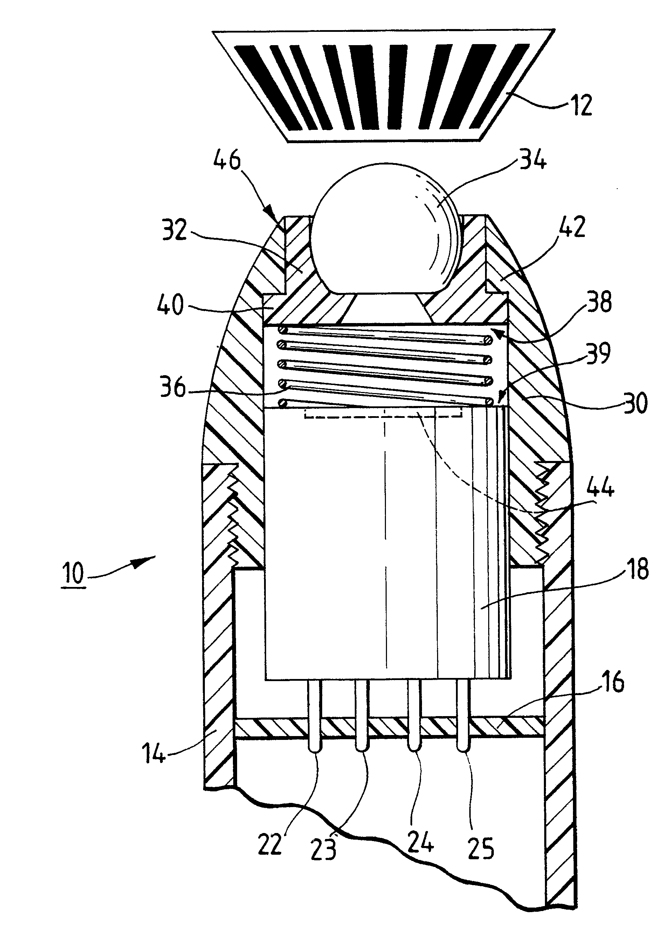

The invention will now be described by way of example with reference to the drawing, in which Figure 1 is a fragmentary, side elevation view, partially in cross-section, of a bar code reading wand in accordance with the present invention.

Referring now to the Drawing, Figure 1 shows a partially cross-sectional view of the reading end of a bar code reading wand, generally indicated by the reference numeral 10, disposed as if a bar code 12 (shown in perspective) were about to be read. Wand 10 includes a barrel portion 14 within which is fixedly disposed a printed circuit board 16. A bar code detector 18 is secured to printed circuit board 16 by means of pins 22-25 fixed to the bar code detector and inserted through the printed circuit board. The elements described above may be found in conventional bar code reading wands.

Threadedly attached to barrel portion 14 is a lens holder 30. Disposed within lens holder 30 for relative axial back-and-forth movement therein is a lens mount 32 having secured therein a lens 34. Lens mount 32 is biased to the position shown on Figure 1, with lens 34 protruding from the end of lens holder 30, by means of a spring 36 disposed between the inner surface 38 of lens mount 32 and the upper surface 39 of bar code detector 18. Lens mount 32 is prevented from movement out of wand 10 by means of an annular flange 40 formed on the lens mount engaging an annular ledge 42 formed on the inner periphery of lens holder 30 and the lens mount is retained against radial movement by sliding engagement with the lens holder.

With the positions of the elements thereof shown on Figure 1, wand 10 may be used to read bar code 12 by contacting, or nearly contacting, the bar code with lens 34 and moving the lens across the bar code. Bar code detector 18 includes a light source and the alternating patterns of light and dark of bar code 12 are focused by lens 34 through a window 44 disposed at the upper end of the bar code detector.

Should wand 10 be dropped so as to contact lens 34 with a hard surface or should the lens otherwise sharply contact a hard surface, lens 34 and lens mount 32 will be readily pushed into lens holder 30 by means of compression of spring 36 and the tip 46 of lens holder 30 will then receive most of the force of the contact and, in most cases, the lens will remain unharmed. Spring 36 is chosen such that it has a force constant low enough that lens mount 32 can be readily pushed into lens holder 30 on impact. However, the force constant must be high enough that the contact of lens 34 with a bar code in normal use will not cause the lens to be pushed into lens holder 30, such that the light received by bar code detector 18 becomes unfocused, or such that tip 46 of the lens holder contacts and damages the bar code.

The distance between inner face 38 of lens mount 32 and the upper surface of bar code detector 18 when the elements of wand 10 are disposed as shown on Figure 1, that is, approximately the distance through which spring 36 can be compressed, is selected to be somewhat greater than the distance that lens 34 protrudes from tip 46 of lens holder 30, so that the spring cannot be fully compressed against the bar code detector and thereby transmit the full force of the impact from the lens to the bar code detector.

Should lens 34 nevertheless become damaged, it may be easily replaced by removing lens holder 30 from barrel 16 and replacing the lens and lens mount 32 with a new mounted lens and then reattaching the lens holder to the barrel.

A further advantage of the present invention is that existing bar code reading wands can easily be retrofit with a retracting lens by simply removing the lens holders thereof and replacing them with lens holders according to the present invention. Of course, the means for attachment of the new lens holders to the existing barrels will be whatever was provided for the existing bar code reading wands.

The novel elements of wand 10 can be constructed of any desired materials known in the art.

It will thus be seen that the objects set forth above, among those made apparent from the preceding description and the accompanying drawing figure, are efficiently attained and, since certain changes may be made in the above construction without departing from the scope of the invention, it is intended that all matter contained in the preceding description or shown on the accompanying drawing figure shall be interpreted as illustrative only and not in a limiting sense.

It is also to be understood that the following claims are intended to cover all of the generic and specific factures of the invention herein described, and all statements of the scope of the invention which, as matter of language, might be said to fall therebetween.

## Claims

1. A bar code reader wand, comprising:
   (a) a body;
   (b) a lens disposed within said body for axial back-and-forth movement relative thereto; and
   (c) biasing means to urge said lens to a normal position protruding from one end of said body and to allow said lens to be readily pushed into said body when said lens contacts a hard surface.

2. A bar code reader wand, as defined in Claim 1, wherein said lens is fixed in mounting means.

3. A bar code reader wand, as defined in Claim 2, wherein a first end of said biasing means bears against said mounting means.

4. A bar code reader wand, as defined in Claim 2, wherein said mounting means is secured against radial movement with respect to said body by means of sliding engagement with an inner peripheral surface of said body.

5. A bar code reader wand, as defined in Claim 2, further comprising a bar code detector fixedly disposed in said body and wherein a second end of said biasing means bears against said bar code detector.

6. A bar code reader wand, as defined in Claim 2, wherein:
   (a) said body comprises a barrel portion;
   (b) said one end of said body comprises a lens holder portion removably attached to said barrel portion; and;
   (c) said lens mount is disposed within said lens holder portion.

7. A bar code reader wand, as defined in Claim 6, wherein said lens holder portion is threadedly attached to said barrel portion.

8. A bar code reader wand, comprising:
   (a) a generally hollow, cylindrical barrel portion;
   (b) a printed circuit board fixedly disposed within said barrel portion;

(c) a bar code detector fixedly mounted on said printed circuit board;

(d) a generally hollow, cylindrical lens holder portion removably attached to said barrel portion, said lens holder having an open end;

(e) a lens mount slidingly disposed in said lens holder for axial back-and-forth movement relative thereto;

(f) a lens mounted in said lens mount such that said lens protrudes from said open end of said lens holder in a normal position;

(g) an annular flange formed on said lens mount to engage an annular ledge form in the inner periphery of said lens holder portion to prevent the movement of said lens mount out of said open end; and

(h) a spring compressed between said bar code detector and said lens mount to bias said lens mount toward said normal position and to allow said lens mount with said lens thereon to be readily pushed into said lens holder by compression of said spring when said lens sharply contacts a hard surface.

9. A bar code reader wand, as defined in Claim 8, therein the distance said spring may be compressed is greater than the distance said lens can protrude from open end.

10. Every novel system, apparatus, method, or article disclosed herein.